(19) Europäisches Patentamt
European Patent Office
Office européen des brevets

(11) EP 3 481 022 B1

(12) **EUROPEAN PATENT SPECIFICATION**

(45) Date of publication and mention of the grant of the patent:
**03.06.2020 Bulletin 2020/23**

(51) Int Cl.:
***H04L 27/26*** *(2006.01)*

(21) Application number: **18203613.7**

(22) Date of filing: **31.10.2018**

(54) **METHOD OF RECEIVING OR TRANSMITTING DATA BY UE OR BASE STATION UNDER NOMA SCHEME, UE USING THE SAME AND BASE STATION USING THE SAME**

VERFAHREN ZUM EMPFANGEN ODER SENDEN VON DATEN DURCH UE ODER BASISSTATION UNTER NOMA-SCHEMA, UE MIT VERWENDUNG DAVON UND BASISSTATION MIT VERWENDUNG DAVON

PROCÉDÉ DE RÉCEPTION OU DE TRANSMISSION DE DONNÉES PAR UE OU STATION DE BASE DANS UN SCHÉMA NOMA, UE UTILISANT CELUI-CI ET STATION DE BASE L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.11.2017 US 201762580022 P**
**29.10.2018 US 201816172889**

(43) Date of publication of application:
**08.05.2019 Bulletin 2019/19**

(73) Proprietor: **Industrial Technology Research Institute**
**31040 Hsinchu (TW)**

(72) Inventors:
- **SHIEH, Shin-Lin**
  **302 Hsinchu County (TW)**
- **LIN, Chia-Hung**
  **717 Tainan City (TW)**

(74) Representative: **Becker & Kurig Partnerschaft Patentanwälte PartmbB**
**Bavariastrasse 7**
**80336 München (DE)**

(56) References cited:
**WO-A1-2016/158537** **WO-A1-2017/041297**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

TECHNICAL FIELD

The present disclosure is directed to a method of receiving or transmitting data by a UE or by a base station which operates under a Non-Orthogonal Multiple Access (NOMA) scheme, a UE using the same method, and a base station using the same method.

BACKGROUND

Conventionally, Non-orthogonal Multiple Access (NOMA) has been considered an emerging radio access technique to be used in the next-generation wireless communication system. Relative to Orthogonal Frequency Division Multiple Access (OFDMA), NOMA offers potential benefits which includes increased spectrum efficiency, reduced latency, massive connectivity, and so forth. Moving toward NOMA would enable a wireless communication network to serve multiple users by using the same time slot, the same frequency, and the same space. The NOMA scheme has the potential to be applied in various fifth generation (5G) communication scenarios including Machine-to-Machine (M2M) communications and the Internet-of-Things (IoT). NOMA may also be readily integrated with various effective wireless communications techniques, such as cooperative communications, multiple-input multiple-output (MIMO), beamforming, space-time coding, network coding, full-duplex, etc.

NOMA can be divided into several categories which may include power domain, code based, sequence based, interleaver, scrambler, etc. Among the several categories of NOMA, power domain NOMA and code domain NOMA are the categories that are discussed the most. Essentially, power domain NOMA functions by multiplexing users in the power domain, and code domain NOMA functions by multiplexing users in the code domain. Since this disclosure focuses on power domain NOMA, power domain NOMA will be shorthanded as simply "NOMA" in the rest of this disclosure. The advantage of power domain NOMA relative to other categories of NOMA is that less redesign efforts are required to bring current UEs to be in line with a power domain NOMA scheme since power domain NOMA has already been adopted in LTE downlink NOMA scheme.

FIG. 1 illustrates an existing NOMA technique. In FIG. 1, a base station 111 would transmit and receive at least two different signals that are superimposed in the same frequency spectrum from at least two different user equipment which are UE 101 and UE 102 in this example. The first UE 101 may transmit with a larger channel gain from the second UE 102 and thus the received power level of the first UE 101 would be higher than the second UE 102. In order for the receiver of the base station 111 to decode signals from the two UEs 101 102, in step S121, the base station 111 would first decode the signal of the first UE 101 from a superimposed signal which includes a signal from the first UE 101 and a signal from a second UE 102. The signal from the first UE is received with a higher power level than the signal received from the second UE 102. In step S122, the base station 111 would perform a successive interference cancellation (SIC) procedure by subtracting signal of the first UE 101. In step S123, the base station would decode the signal of the second UE 102 from the signal which has cancelled the signal of the first UE 101.

FIG. 2 illustrates another example of an existing NOMA technique. In this example, the first UE 201 is assumed to operate under a stronger channel gain but a weaker signal power than the second UE 202, and the two UEs 201 202 would receive a superimposed signal from a base station 203. Since first UE 201 operate under a weaker signal power, the first UE 201 needs to subtract the interference signal from the second UE 202 while the second UE 202 can perform signal detection without a performing SIC procedure.

In general, when operating under a NOMA scheme, a base station would transmit an encoded signal for each user which are superimposed within a physical resource as a sum of all messages of the users. The users are arranged with respect to their effective channel gains with the lowest gain at the bottom of the sequence while the one with the highest gain is at the top with other users arranged in between. For the reason of fairness, NOMA would ensure that the users with less gain would operate under higher power than users with higher gain. However, since NOMA would allow multiple users to be superimposed on the same physical resource, by doing so, the gaps of power levels among each UE would be small and it would degrade the performance of NOMA. Consequently, a modification of the existing transmission technique under power domain NOMA would be needed in order to enhance resource management and to minimize interferences.

WO 2016/158537 A1 discloses a wireless base station including a transmitting unit that transmits down-link signals for a plurality of user terminals having a MIMO configuration by power-multiplexing; and a control unit that controls phase rotation to be applied to the down-link signals for the respective user terminals. The control unit performs the control so that different phase rotations are applied to the down-link signals.

## SUMMARY OF THE DISCLOSURE

The invention is defined by the appended claims. The embodiments that do not fully fall under the scope of the claims have to be interpreted as examples useful for understanding the invention. The following disclosure serves a better understanding of the

It should be understood, however, that this summary may not contain all of the aspects and embodiments of the present disclosure and is therefore not meant to be limiting or restrictive in any manner. Also, the present disclosure would include improvements and modifications which are obvious to one skilled in the art.

BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.

FIG. 1 illustrates an existing power domain NOMA technique.
FIG. 2 illustrates a typical power domain NOMA technique which multiplexes multiple users by performing SIC at a receiver of a base station.
FIG. 3 illustrates a signal constellation diagram of a power domain NOMA technique in accordance with one of the exemplary embodiments of the disclosure.
FIG. 4 illustrates a plot showing minimum distances as a function of power ratio under a power domain NOMA technique of QPSK + QPSK in accordance with one of the exemplary embodiments of the disclosure.
FIG. 5 illustrates a first exemplary embodiment of a method of transmitting data under NOMA scheme.
FIG. 6 illustrates a second exemplary embodiment of a method of transmitting data under NOMA scheme.
FIG. 7 illustrates a third exemplary embodiment of a method of transmitting data under NOMA scheme.
FIG. 8 illustrates a fourth exemplary embodiment of a method of transmitting data under NOMA scheme.
FIG. 9 illustrates a method of transmitting data under NOMA scheme from the perspective of a user equipment.
FIG. 10 illustrates a hardware diagram of a user equipment in terms of functional block diagrams in accordance with one of the exemplary embodiments of the disclosure.
FIG. 11 illustrates a method of transmitting data under NOMA scheme from the perspective of a base station.
FIG. 12 illustrates a hardware diagram of a base station in terms of functional block diagrams in accordance with one of the exemplary embodiments of the disclosure.

## DETAILED DESCRIPTION OF DISCLOSED EMBODIMENTS

Reference will now be made in detail to the present exemplary embodiments of the disclosure, examples of which are illustrated in the accompanying drawings. Wherever possible, the same reference numbers are used in the drawings and the description to refer to the same or like parts.

Non-orthogonal multiple access (NOMA) has recently emerged as a promising multiple access technique for LTE enhancements and 5G due to its better cell coverage and potentially higher throughput than the traditional orthogonal multiple access (OMA). Under NOMA, signals would be superimposed under two or more constellations in the power domain. In this disclosure, a concept of inter-constellation rotation would be proposed based on several schemes including the minimum distance (MD) criterion, mutual information (MI) criterion, and random rotation criterion over downlink/uplink (DL/UL) NOMA scenario. In comparison with traditional power domain NOMA, inter-constellation rotation schemes would achieve a more robust error performance.

Thus, the disclosure provides a method of transmitting data by a UE under a Non-Orthogonal Multiple Access (NOMA) scheme, a UE using the same method, and a base station using the same method. The provided method would be applicable to both downlink and uplink transmissions. To utilized such method, a transmission power ratio between at least two UEs would be determined. The goal is to determine the best transmission power ratio which will result in having the optimal receiving power ratio of the combined signal in the receiving end. When operating under different transmission power ratios, for each transmission power ratio, a different rotation angle would be applied to each of the user data. In other words, the signal constellation of a UE could be rotated relative to another user when the signals for each UE is to be superimposed to be transported within the same physical resource.

Thus, the disclosure further proposes ways to obtain a best rotation angle of the signal constellation for each UE when all UE are combined into a superimposed signal to be received by the receiving end. After the superimposed signal is received by the receiving end, the receiver of the receiving end may decode the appropriate data content according to the transmission power ratio and the rotation angle. In order to do so, the transmitting end and the receiving end may need to know and agree in advance which power ratio and rotation angle are going to be used. The basis for calculating the rotation angle can be based on various methods such as randomly generated rotational angle, maximizing information method (MI method), and maximizing distance method (MD method) which will be elaborated further in latter disclosure.

FIG. 3 illustrates the above described concept of rotating signal constellation diagram. The first plot of FIG. 3 shows a signal constellation diagram of two signals superimposed into the same physical resource under a conventional NOMA scheme. The second plot 302 of FIG. 3 shows a signal constellation diagram of two signals superimposed into the same physical resource under the proposed NOMA scheme as each of the signal constellations are rotated by a rotational angle as shown in FIG. 3 to be $\Theta_1$ degree for the first signal and $\Theta_2$ degree for the second signal. Also, as seen in FIG. 3, two constellations under conventional NOMA scheme have a minimum distance $d_{min}1$ between the two constellations, the two constellations under the proposed NOMA scheme have a minimum distance $d_{min}2$ between the two constellations, and $d_{min}2 > d_{min}1$.

FIG. 4 illustrates a graph comparing minimum distances as a function of power ratio under two different NOMA schemes of QPSK + QPSK. By comparing the first curve 401 under the conventional NOMA and the second curve under the proposed NOMA scheme having a phase rotation of signal constellations, it can be seen that the proposed NOMA scheme would have a greater minimum distance as the power ratio becomes greater in comparison to the conventional NOMA scheme. Because the proposed NOMA scheme as shown in FIG. 3 and FIG. 4 would result in greater maximized minimum distance between the minimum constellation points than the maximized minimum distance between the minimum constellation points of a conventional NOMA scheme, the proposed NOMA scheme would result in greater signal integrity, better signal to noise ratio, and less decoding errors.

The above described rotation angle of each of the signal constellations could be determined in three way including (1) randomly selected phase in a phase vector, (2) maximizing the amount of information combined with the constellation points (mutual information), or by (3) maximizing the minimum distance between the minimum constellation points (minimum inter-distance). Method (2) will be abbreviated as MI method and method (3) will be abbreviated as MD method from this point forward.

For method (1), the rotational angle of each of the signal constellations could be determined by randomly selecting a phase in a phase vector according to Equation (1) below.

$$[0, (\frac{1}{Q-1})(\pi/2),( \frac{2}{Q-1})(\pi/2),\ldots,(\frac{Q-2}{Q-1})(\pi/2),\pi/2] \qquad \text{Equation (1)}$$

It should be noted that Q should be larger or equal than the maximum number of UEs or the maximum number of total applications.

For method (2), MI based rotational angle of each of the signal constellations could be determined by calculating the rotational angle, $\boldsymbol{\theta}^*_{\mathrm{MI}}$, according to Equation (2) below.

$$\boldsymbol{\theta}^*_{\mathrm{MI}} = \arg\max_{\theta_1,\theta_2,\ldots,\theta_K \in \Theta} I\left(\sqrt{\mathrm{P}_1}x_1 e^{i\theta_1} + \sqrt{\mathrm{P}_2}x_2 e^{i\theta_2} + \cdots + \sqrt{\mathrm{P}_\mathrm{K}}x_K e^{i\theta_K}; y\right)$$

Equation (2)

$\boldsymbol{\theta}^*_{\mathrm{MI}}$ could be determined based on a pre-defined tables which follow the MI-maximizing-based rule as described in Equation (2). By determining the power ratio between the first signal (P1) and the second signal (P2) which are superimposed in the same physical source, the $\boldsymbol{\theta}^*_{\mathrm{MI}}$ values as a function of different signal to noise ratio (SNR) in decibel (dB) can be compiled and listed in a table. Table 1 below shows an example of two UEs or two applications of QPSK + QPSK signal constellations with a power ratio of 0.8.

Table 1

| SNR in dB | $\boldsymbol{\theta}^*_{\mathrm{MI}}$ $(\theta^*_{\mathrm{MI},1}, \theta^*_{\mathrm{MI},2})$ |
|---|---|
| 6 dB | (0, 0.6606) |
| 7 dB | (0, 0.6094) |
| 8 dB | (0, 0.5863) |

(continued)

| SNR in dB | $\boldsymbol{\theta}^*_{\mathrm{MI}}$ $(\theta^*_{\mathrm{MI},1}, \theta^*_{\mathrm{MI},2})$ |
|---|---|
| 9 dB | (0, 0.5670) |
| 10 dB | (0, 0.5550) |

Table 2 below shows an example of three UEs or three applications Ex: 3-UE/application QPSK+QPSK+16QAM with power ratio 9:8:7

Table 2

| SNR in dB | $\boldsymbol{\theta}^*_{\mathrm{MI}}$ $(\theta^*_{\mathrm{MI},1}, \theta^*_{\mathrm{MI},2}, \theta^*_{\mathrm{MI},3})$ |
|---|---|
| 15 dB | (0, 0.4416, 0.2310) |
| 16 dB | (0, 0.4476, 0.2392) |
| 17 dB | (0, 0.4522, 0.2405) |
| 18 dB | (0, 0.4536, 0.2478) |

For method (3), MD method based rotational angle of each of the signal constellations could be determined according to equations below to determine $(\theta_1^*, \theta_2^*, \ldots \theta_k^*)$, where $\theta_k^*$ is the rotational angle of each of the signal constellations. Equation (3) below is for calculating $(\theta_1^*, \theta_2^*)$ which are the rotational angle of two different UEs or two different applications

$$(\theta_1^*, \theta_2^*) = \arg\max_{\theta_1,\theta_2 \in \Theta} d_{\min}\left(\sqrt{\mathrm{P}_1} x_1 e^{i\theta_1} + \sqrt{\mathrm{P}_2} x_2 e^{i\theta_2}\right) \qquad \text{Equation (3)}$$

The $(\theta_1^*, \theta_2^*)$ could be dynamically calculated by finding solutions to the closed-form equation, e.g., $\sin^{-1}(\sqrt{P_2/P_1})$ for QPSK+QPSK. However, the $(\theta_1^*, \theta_2^*)$ could be also be determined according to a pre-defined phase table as shown in Table 3 below for an QPSK+QPSK example.

Table 3

| $P_1/P_2$ | $\boldsymbol{\theta}^*_{\mathrm{MD}}$ $(\theta^*_{\mathrm{MD},1}, \theta^*_{\mathrm{MD},2})$ |
|---|---|
| 1 | (0,0.5236) |
| 3 | (0,0.2928) |
| 4 | (0,0.2527) |
| 9 | (0,0.1674) |

The complete expression for greater than two UEs or applications are shown in the follow expressions below:

$$(\theta_1^*, \theta_2^*) = \arg \max_{\theta_1, \theta_2 \in \Theta} d_{\min}\left(\sqrt{P_1} x_1 e^{i\theta_1} + \sqrt{P_2} x_2 e^{i\theta_2}\right)$$

$$\theta_3^* = \arg \max_{\theta_3 \in \Theta} d_{\min}\left(\sqrt{P_1} x_1 e^{i\theta_1^*} + \sqrt{P_2} x_2 e^{i\theta_2^*} + \sqrt{P_3} x_3 e^{i\theta_3} | \theta_1^*, \theta_2^*\right)$$

$$\vdots$$

$$\theta_K^* = \arg \max_{\theta_K \in \Theta} d_{\min}\left(\sqrt{P_1} x_1 e^{i\theta_1^*} + \cdots + \sqrt{P_K} x_K e^{i\theta_K} | \theta_1^*, \ldots, \theta_{K-1}^*\right)$$

$$\boldsymbol{\theta}_{\mathrm{MD}}^* = (\theta_1^*, \theta_2^*, \ldots, \theta_K^*)$$

The solutions of the expressions above could be dynamically calculated by finding solutions to the closed-form equations, e.g., $\sin^{-1}(\sqrt{P_2/P_1})$ for QPSK+QPSK. However, the solutions could be also be determined according to a pre-defined phase table as shown in Table 4 below for an QPSK+QPSK+16QAM example.

Table 4

| $P_1$:$P_2$:$P_3$ | $\boldsymbol{\theta}_{\mathrm{MD}}^*$ $(\theta_{\mathrm{MD},1}^*, \theta_{\mathrm{MD},2}^*, \theta_{\mathrm{MD},3}^*)$ |
|---|---|
| 10:6:1 | (0, 0.3977,1.5708) |
| 10:6:4 | (0.2, 0.5977, 1.5608) |
| 9:8:7 | (0.1, 0.5636, 0.3510) |
| 9:8:6 | (0.5, 0.6674, 0.8880) |

To elucidate the above described concepts, FIG. 5 illustrates a first exemplary embodiment of a method of transmitting downlink data under the NOMA scheme from a base station to multiple UEs. In step S501, the base station would determine each of the information bit streams to be transmitted to each of the corresponding co-scheduled UEs. In step S502, the base station would encode each information bit stream by channel encoder to generate encoded bit stream for each of the co-scheduled UEs. In step S503, the base station would map each encoded bit stream to corresponding constellation points to be a modulated symbol stream. In step S504, the base station would determine the phase rotation of each transmitted symbol stream of each of the co-scheduled UEs. In step S505, the base station would multiply the phases to rotate each UE's transmitted symbol with corresponding power level and then combining them together into a combined signal to be transported in the same physical resource.

For the example of FIG. 5 in which a base station transmits downlink data to three UEs, the base station would turn on a flag which indicates that the base station would perform inter-constellation rotation when operating under NOMA. The flag could be transmitted to UEs through a control channel or RRC signaling. Assuming that the base station sets the code rate of the first UE as 1/4, the code rate of the second UE as 1/5, and the code rate of the third UE as 1/2 while the modulation scheme of the first UE as QPSK, the modulation scheme of the second UE as QPSK, and the modulation scheme of the third UE as 16QAM. The power ratio among the first UE, the second UE, and the third UE (P1:P2:P3) is 9:8:7. Based on the power ratio, the base station may select the angles of rotations of each of the UEs from a pre-defined phase table which has been constructed by following the MD method which has been described under method (3) above. Moreover, the base station may also transmit information including one or more of the Modulation and Coding scheme (MCS), the power ratio, and the angles of rotations to each of the UEs via a control channel signaling or a RRC signaling. Alternatively, the base station may only inform the power ratio which allows the UEs to determine its angles of rotations (S511) via a lookup table.

FIG. 6 illustrates a second exemplary embodiment of a method of multiple UEs transmitting uplink data to a base station under the NOMA scheme. In step S601, the base station would determine the phases of each UE and would inform the phase of rotation and some parameters to each UE. Alternatively, the base station may only inform the power ratio which allows the UEs to determine its angles of rotations via a lookup table. In step S602, Each UE would determine the information bit stream to be uplinked to the base station. In step S603, each would UE encode its information bit stream to generate an encoded bit stream. In step S604, each UE would maps the encoded bit stream to corresponding constellation points as a modulated symbol stream. In step S605, each UE would multiply the phase to transmitted symbols with an assigned power level.

Moreover, in the example of FIG. 6 which involves multiple UEs transmitting uplink data to a base station, in general, the base station would need to know the channel by obtain channel information. Assuming that there are only two UE and thus there are two channels from the two UEs to the BS, and the ratio of the channels has been determined as, $\frac{|h_1|}{|h_2|} = \sqrt{3}$ , then the base station may set the code rate of the first UE as 1/3, the code rate of the second UE as 1/2, the modulation scheme of the first UE as QPSK, the modulation scheme of the second UE as QPSK, and the power ratio (P1:P2) between the first UE and the second UE as 1:1. The angles of rotation could then be determined based on the MD method by finding a closed-form solution for $\theta_1$ = 0 - $\angle h_1$ and $\theta_2 = \sin^{-1}(\sqrt{\frac{|h_1|^2 P_1}{|h_2|^2 P_2}}) - \angle h_2$ with the channel difference being considered. The angles of rotation could then be determined based on the MD method by a pre-defined table which was build by follows the MD method as described under method (3). In the example of FIG. 6, the angles of rotation S611 is assumed to be obtained from the pre-defined table, and subsequently the channel phase compensation could be determined. Similar to the previous exemplary embodiment, the MCS, power ratio, and the angles of rotation could be transmitted to each UE via a control channel signaling or RRC signaling.

FIG. 7 illustrates a third exemplary embodiment of a method of transmitting uplink data under the NOMA scheme from multiple applications to a base station. The multiple applications could from the same UEs or could belong to different UEs. In step S701, the UE would determine each information bit stream for each of the multiple applications. In step S702, the UE would encode each information bit streams by a channel encoder to generate an encoded bit stream. In step S703, the UE would map each application's encoded bit stream to corresponding constellation points to be a modulated symbol stream. In step, S704, the UE would determine the angle of rotation for each of the transmitted symbol streams which corresponds to each application assuming that the base station doesn't assign the phase parameter. In step S705, the UE would multiply the angle of rotation to each application's transmitted symbol with the corresponding power level and then combining the transmitted symbols of all applications together to be transported in the same physical resource.

In the example of FIG. 7, the operations to be described below can be performed by either the base station or each individual UE. For instance, the UE may set the flag as 'ON' to indicate that the inter-constellation angles of rotation will be implemented while operating under NOMA. Assuming that the number of applications is 3, the UE may set code rate of the first application as 1/4, the code rate of the second application as 1/5, the code rate of the third application as 1/2, the modulation scheme of the first application as QPSK, the modulation scheme of the second application as QPSK, and the modulation scheme of the third application as 16QAM, and the power ratio among the three applications (PI :P2:P3) are determined to be 9:8:7. The angles of rotations (S711) for each of the three applications could be selected from a pre-defined phase table which is built following the MD method as described in method (3) above. The parameters which are not determined by the base station are to be sent to the base station via a control channel signaling or a RRC signaling. Conversely, assuming that the parameters above are not determined by a UE but was determined by a base station, the base station would then communicate the parameters to the UE via a control channel signaling or a RRC signaling.

FIG. 8 illustrates a fourth exemplary embodiment of a method of multiple UEs transmitting uplink data of multiple applications under the NOMA scheme. In step S801, the base station would determine the angles of rotation to each UE and informs each UE which angle of rotation one should use. In step S802, the UE would determine the information bit stream to be transmitted for each application. In step S803, each UE would encode each application's information bit stream by a channel encoder. In step S804, each UE would map each application's encoded bit stream to corresponding constellation points as a modulated symbol stream. In step S805, each UE would combine each application's modulated symbol stream with corresponding power to be a transmitted symbol stream. In step S805, each UE would multiples the previously determined angle of rotation to each transmitted symbol with corresponding power levels.

For the example of FIG. 8, the base station would need to know the channel and thus the parameters below would need to be determined by the base station. It is assumed that the base station has set the number of applications of the first UE as 3, the number of applications of the second UE as 2, the number of applications of the third UE as 1, the code rate of the first application of the first UE as 1/2, the code rate of the second application of the first UE as 1/4, the code rate of the third application of the first UE as 1/4, the code rate of the first application of the second UE as 1/2, the code rate of the second application of the second UE as 1/5, the code rate of the third application of the third UE as 1/2, the modulation scheme of the first application of the first UE as QPSK, modulation scheme of the second application of the first UE as 16QAM, the modulation scheme of the third application of the first UE as 16QAM, the modulation scheme of the first application of the second UE as is QPSK, the modulation scheme of the second application of the second UE as 16QAM, the modulation scheme of the third application of the third UE as 64QAM, and the power levels are respectively 1, 3/5, 2/5, 1, 1/2 and P6=3/4. The angles of rotation could be determined using method (1) from the phase vector by setting Q=6 so that the phase vector $[0, (\frac{1}{Q-1})(\pi/2), (\frac{2}{Q-1})(\pi/2), \ldots, (\frac{Q-2}{Q-1})(\pi/2), \pi/2] = \left[0, \frac{\pi}{10}, \frac{2\pi}{10}, \frac{3\pi}{10}, \frac{4\pi}{10}, \frac{\pi}{2}\right]$ which provides the 6 phases for 6 UEs or applications for use. Thus, in this example, from $\theta_1$ to $\theta_3$ can randomly be selected from a phase vector, such as 0, $\frac{2\pi}{10}, \frac{4\pi}{10}$ which would be used for channel phase compensation.

FIG. 9 illustrates a method of transmitting data under NOMA scheme from the perspective of a user equipment. In step S901, the UE would receive within the same physical resource, a combined signal having a first signal and a second signal that are superimposed on each other. The physical resource could be a time slot, frequency band, space, etc. In step S902, the UE would apply a phase rotation information for the first signal and the second signal. In step S903, the UE would remove, from the combined signal, the second signal based on the phase rotation information. In step S904, the UE would decode the first signal from the combined signal.

Regarding step S902, there are multiple exemplary embodiments which could implemented based on different scenarios. According to FIG. 6 which involves multiple UEs but single application, the base station determines the phase rotation information and transmit to each UE, and thus the UE would apply a phase rotation information according to information received from the base station. According to FIG. 7 which involves single UE with multiple applications, the UE would determine the phase rotation information for each application and transmit the combined signal by using the phase rotation information to the base station. In FIG. 8 which involves the multiple UEs and multiple applications, a UE would use a previously determined power ratio and generate a combined signal from each of the multiple applications by using the power ratio as combined signal contains multiple modulated signal under various modulation schemes such as (QPSK, 16QAM, 64 QAM, etc.). Subsequently the UE would use the phase angle rotation which was determined by the base station to multiply with the combined signal before transmitting the phase rotated combined signal to the base station.

In one of the exemplary embodiments, the above described determining the phase rotation information may include determining a power ratio between the first signal and the second signal and determining the phase rotation information based on the power ratio, wherein phase rotation information includes a first phase angle of a first signal constellation of the first signal and a second phrase angle of a second signal constellation of the second signal.

In one of the exemplary embodiments, the above described determining the phase rotation information based on the power ratio may include determining the phase rotation information based on the power ratio from a lookup table which is stored in the UE. Each entry of the lookup table may contain a different power ratio and, the first phase angle of the first signal and the second phase angle of the second signal corresponding to the different power ratio. Each entry of the lookup table could be predetermined based on one of several schemes including a randomly selected phase in a phase vector, maximizing a minimum distance between constellation points of the second signal constellation and maximizing information combined with the constellation points of the second signal constellation.

In one of the exemplary embodiments, the above described determining the phase rotation information may include receiving the phase rotation information from a base station. The above described determining the phase rotation information may further include receiving one of power level information of each of the first signal and the second signal, modulation and coding scheme (MCS) of each of the first signal and the second signal, and a flag which indicates that phase rotations of the first signal and the second signal are currently being applied.

In one of the exemplary embodiments, the first signal is intended for UE, but the second signal is intended for a different UE. Alternatively, the first signal is for a first application of the UE, and the second signal is for a second application of the same UE. In one of the exemplary embodiments, the combined signal further includes a third signal and each different power ratio of each entry of the lookup table further corresponds to a third phrase angle of the third signal.

FIG. 10 illustrates a hardware diagram of a user equipment in terms of functional block diagrams in accordance with one of the exemplary embodiments of the disclosure. The exemplary UE 1000 would include not limited to a hardware processor 1001 electrically connected to at least a hardware transceiver 1002 and a non-transitory storage medium 1003. The hardware processor 1001 is configured at least to receive, within the same physical resource through the hardware transceiver 1002, a combined signal having a first signal and a second signal that are superimposed on each other, apply a phase rotation information for the first signal and the second signal, remove, from the combined signal, the second signal based on the phase rotation information, and decode the first signal from the combined signal.

The term "user equipment" (UE) in this disclosure may be, for example, a mobile station, an advanced mobile station (AMS), a server, a client, a desktop computer, a laptop computer, a network computer, a workstation, a personal digital assistant (PDA), a tablet personal computer (PC), a scanner, a telephone device, a pager, a camera, a television, a hand-held video game device, a musical device, a wireless sensor, and the like. In some applications, a UE may be a fixed computer device operating in a moving environment, such as a bus, a train, an airplane, a boat, a car, and so forth.

The hardware transceiver 1002 would include a transmitter and a receiver and could be configured to operate in the radio frequency or millimeter wave (mmWave) frequency and may also perform operations such as low noise amplifying, impedance matching, frequency mixing, up or down frequency conversion, filtering, amplifying, and so forth. The hardware transceiver 1002 may each include one or more analog-to-digital (A/D) and digital-to-analog (D/A) converters which are configured to convert from a digital signal format to an analog signal format during uplink signal processing and from an analog signal format to digital signal format during downlink signal processing. The hardware transceiver 1002 may further include an antenna array which has multiple antennas capable of transmitting and receiving omni-directional beams or directional antenna beams. The hardware transceiver 1002 may contain one or more transceivers for communicating in the same or other licensed or unlicensed spectrum.

The hardware processor 1001 is configured to process digital signals and to perform procedures of the proposed method of transmitting data under the disclosed power NOMA scheme. The hardware processor 1001 could be implemented by using programmable units such as a micro-processor, a micro-controller, a DSP chips, FPGA, etc. The functions of the processor(s) may also be implemented with separate electronic devices or ICs. It should be noted that the functions of hardware processor 1001 may be implemented with either hardware or software. Also, the hardware processor 1001 may access to a non-transitory storage medium 103 which stores programming codes, codebook configurations, buffered data, or record configurations assigned by the hardware processor 1001. For example, the non-transitory storage medium 103 could be used to store the above described lookup table.

FIG. 11 illustrates a method of transmitting data under NOMA scheme from the perspective of a base station. In step S1101, the base station would transmit a phase rotation information. In step S1102, the base station would receive within the same physical resource, a combined signal having at least a first signal and a second signal that are superimposed on each other. The physical resource could be a time slot, frequency band, space, etc. In step S1103, the base station would decode, from the combined signal, the first signal. In step S1104, the base station would decode, from the combined signal, the second signal based on the phase rotation information.

In one of the exemplary embodiments, before transmitting the phase rotation information, the base station may determine the phase rotation information based on a power ratio between the first signal and the second signal. The rotation information may include a first phase angle of a first signal constellation of the first signal and a second phrase angle of a second signal constellation of the second signal. The base station determining the phase rotation information based on the power ratio between the first signal and the second signal may further include determining the phase rotation information based on the power ratio from a lookup table which is stored in the base station.

In one of the exemplary embodiments, each entry of the lookup table may contain a different power ratio and the corresponding first phase angle of the first signal and the corresponding second phase angle of the second signal. Each entry of the lookup table may have been predetermined based on a randomly selected phase in a phase vector, by maximizing a minimum distance between constellation points of the second signal constellation, or by maximizing mutual information combined with the constellation points of the second signal constellation.

In one of the exemplary embodiments, in addition to transmitting a phase rotation information, the base station may further transmit one of a power level information of each of the first signal and the second signal, a modulation and coding scheme (MCS) of each of the first signal and the second signal, and a flag which indicates that phase rotations of the first signal and the second signal are currently being applied.

In one of the exemplary embodiments, the first signal is intended for a first UE and the second signal is intended for a second UE. Alternatively, the first signal is intended for a first application of a first UE and the second signal is intended for a second application of the same first UE. In one of the exemplary embodiments, the combined signal further includes a third signal and each different power ratio of each entry of the lookup table further corresponds to a third phrase angle of the third signal.

FIG. 12 illustrates a hardware diagram of a base station in terms of functional block diagrams in accordance with one of the exemplary embodiments of the disclosure. The base station may include not limited to a hardware processor 1201, a hardware transceiver 1202, and a non-transitory storage medium 1203. The hardware processor 1201 are electrically connected to the hardware transceiver 1202 and the non-transitory storage medium 1203 and configured at least for transmitting a phase rotation information, receiving, within a same physical resource, a combined signal comprising a first signal and a second signal that are superimposed on each other, decoding, from the combined signal, the first signal, and decoding, from the combined signal, the second signal based on the phase rotation information.

The term base station (BS) in this disclosure could be synonymous, for example, with a variation or a sub-variation of a gNB, an "eNodeB" (eNB), a Node-B, an advanced base station (ABS), a base transceiver system (BTS), an access point, a home base station, a relay station, a scatterer, a repeater, an intermediate node, an intermediary, satellite-based communication base stations, and so forth.

The hardware transceiver 1202 may include one or more transmitters and receivers configured to transmit and receive signals respectively in the radio frequency or in the mmWave frequency. The hardware transceiver 1202 may also perform operations such as low noise amplifying, impedance matching, frequency mixing, up or down frequency conversion, filtering, amplifying, and so forth. The hardware transceiver 1202 may each include one or more analog-to-digital (A/D) and digital-to-analog (D/A) converters which are configured to convert from an analog signal format to a digital signal format during uplink signal processing and from a digital signal format to an analog signal format during downlink signal processing. The hardware transceiver 1202 may further include an antenna array which may include one or multiple antennas to transmit and receive omni-directional antenna beams or directional antenna beams.

The hardware processor 1201 is configured to process digital signals and to perform procedures of the proposed method of network slicing in accordance with the proposed exemplary embodiments of the disclosure. Also, the hardware processor 1201 may access to the non-transitory storage medium 1203 which stores programming codes, codebook configurations, buffered data, record configurations assigned by the hardware processor 1201, and the above describe lookup table. The hardware processor 1201 could be implemented by using programmable units such as a micro-processor, a micro-controller, a DSP chips, FPGA, etc. The functions of the hardware processor 1201 may also be implemented with separate electronic devices or ICs. It should be noted that the functions of hardware processor 1201 may be implemented with either hardware or software.

In view of the aforementioned descriptions, the present disclosure is suitable for being used in a wireless communication system and is able to more accurately decode multiple sets of information that are transported within the same physical resource than the conventional power based NOMA scheme by introducing a phase rotation of signal constellations for each information of the multiple sets of information.

No element, act, or instruction used in the detailed description of disclosed embodiments of the present application should be construed as absolutely critical or essential to the present disclosure unless explicitly described as such. Also, as used herein, each of the indefinite articles "a" and "an" could include more than one item. If only one item is intended, the terms "a single" or similar languages would be used. Furthermore, the terms "any of' followed by a listing of a plurality of items and/or a plurality of categories of items, as used herein, are intended to include "any of', "any combination of', "any multiple of', and/or "any combination of multiples of the items and/or the categories of items, individually or in conjunction with other items and/or other categories of items. Further, as used herein, the term "set" is intended to include any number of items, including zero. Further, as used herein, the term "number" is intended to include any number, including zero.

## Claims

**1.** A method of receiving data by a UE (1000) which operates under a Non-Orthogonal Multiple Access, NOMA, scheme, the method comprising:

receiving, from a base station, within a same physical resource, a combined signal comprising a first signal and a second signal that are superimposed on each other (S901);
the method being further comprised by applying a phase rotation information for the first signal and the second signal (S902) by determining a power ratio between the first signal and the second signal and determining the phase rotation information based on the power ratio;
removing, from the combined signal, the second signal based on the phase rotation information (S903); and
decoding the first signal from the combined signal (S904),
wherein the first signal and the second signal are for different applications of the same UE,
wherein the phase rotation information comprises a first phase angle of a first signal constellation of the first signal and a second phase angle of a second signal constellation of the second signal.

**2.** The method of claim 1, wherein applying the phase rotation information based on the power ratio comprising:
determining the phase rotation information based on the power ratio from a lookup table which is stored in the UE.

**3.** The method of claim 2, wherein each entry of the lookup table contains a different power ratio and, the first phase angle of the first signal and the second phase angle of the second signal corresponding to the different power ratio.

**4.** The method of claim 3, wherein the each entry of the lookup table has been predetermined based on a randomly selected phase in a phase vector, by maximizing a minimum distance between constellation points of the second signal constellation, or by maximizing information combined with the constellation points of the second signal constellation.

**5.** The method of claim 1, wherein applying the phase rotation information further comprising:
receiving one of:

power level information of each of the first signal and the second signal,
modulation and coding scheme, MCS, of each of the first signal and the second signal, and
a flag which indicates that phase rotations of the first signal and the second signal are currently being applied.

**6.** A method of transmitting data by a base station (1200) which operates under a Non-Orthogonal Multiple Access, NOMA, scheme, the method comprising:

determining a phase rotation information based on a power ratio between a first signal and a second signal, wherein the rotation information comprises a first phase angle of a first signal constellation of the first signal and a second phase angle of a second signal constellation of the second signal;
transmitting the phase rotation information (S1101) to a first UE and a second UE;
receiving, from the first UE and the second UE, within a same physical resource, a combined signal comprising a first signal and a second signal that are superimposed on each other (S1102);
decoding, from the combined signal, the first signal (S1103); and
decoding, from the combined signal, the second signal based on the phase rotation information (S1104),
wherein the first signal and the second signal are for different applications of the same UE.

**7.** The method of claim 6, wherein determining the phase rotation information based on the power ratio between the first signal and the second signal further comprising:
determining the phase rotation information based on the power ratio from a lookup table which is stored in the base station.

**8.** The method of claim 7,
wherein each entry of the lookup table contains a different power ratio and, the first phase angle of the first signal and the second phase angle of the second signal corresponding to the different power ratio.

**9.** The method of claim 8, wherein the each entry of the lookup table has been predetermined based on a randomly selected phase in a phase vector, by maximizing a minimum distance between constellation points of the second signal constellation, or by maximizing information combined with the constellation points of the second signal constellation.

**10.** The method of claim 6, wherein transmitting a phase rotation information further comprising:
transmitting one of

power level information of each of the first signal and the second signal, modulation and coding scheme, MCS, of each of the first signal and the second signal, and
a flag which indicates that phase rotations of the first signal and the second signal are currently being applied.

**11.** A UE (1000), operating under a Non-Orthogonal Multiple Access, NOMA, scheme, and the UE comprising:

a hardware transceiver (1002); and
a hardware processor (1001) electrically connected to the hardware transceiver (1002) and configured at least to:
receive, from a base station, within a same physical resource through the hardware transceiver (1002), a combined signal comprising a first signal and a second signal that are superimposed on each other; the hardware processor (1001) is further configured to:

apply a phase rotation information for the first signal and the second signal by determining a power ratio between the first signal and the second signal and determining the phase rotation information based on the power ratio;
remove, from the combined signal, the second signal based on the phase rotation information; and
decode the first signal from the combined signal,
wherein the first signal and the second signal are for different applications of the same UE,
wherein the phase rotation information comprises a first phase angle of a first signal constellation of the first signal and a second phase angle of a second signal constellation of the second signal.

## Patentansprüche

1. **1.** Verfahren zum Empfangen von Daten durch eine UE (1000), die gemäß einem Non-Orthogonal Multiple Access, NOMA, Schema arbeitet, wobei das Verfahren umfasst:

   Empfangen, von einer Basisstation, innerhalb einer selben physikalischen Ressource, eines kombinierten Signals umfassend ein erstes Signal und ein zweites Signal, die aufeinander überlagert sind (S901);
   wobei das Verfahren ferner umfasst ist durch,
   Anwenden einer Phasendrehungsinformation für das erste Signal und das zweite Signal (S902) durch Bestimmen eines Leistungsverhältnisses zwischen dem ersten Signal und dem zweiten Signal und Bestimmen der Phasendrehungsinformation auf Basis des Leistungsverhältnisses;
   Entfernen, von dem kombinierten Signal, das zweite Signal auf Basis der Phasendrehungsinformation (S903); und
   Dekodieren des ersten Signals von dem kombinierten Signal (S904),
   wobei das erste Signal und das zweite Signal für unterschiedliche Anwendungen derselben UE sind,
   wobei die Phasendrehungsinformation einen ersten Phasenwinkel einer ersten Signalkonstellation des ersten Signals und einen zweiten Phasenwinkel einer zweiten Signalkonstellation des zweiten Signals umfasst.

**2.** Verfahren gemäß Anspruch 1, wobei Anwenden der Phasendrehungsinformation auf Basis des Leistungsverhältnisses umfasst,
Bestimmen der Phasendrehungsinformation Auf Basis des Leistungsverhältnisses aus einer Nachschlagetabelle, die in der UE gespeichert ist.

**3.** Verfahren gemäß Anspruch 2, wobei jeder Eintrag der Nachschlagetabelle enthält ein unterschiedliches Leistungsverhältnis und den ersten Phasenwinkel des ersten Signals und den zweiten Phasenwinkel des zweiten Signals entsprechend dem anderen Leistungsverhältnis.

**4.** Verfahren gemäß Anspruch 3, wobei der jeder Eintrag der Nachschlagetabelle auf Basis einer zufällig ausgewählten Phase in einem Phasenvektor vorbestimmt wurde durch Maximieren eines minimalen Abstands zwischen Konstellationspunkten der zweiten Signalkonstellation oder durch Maximieren von Information, kombiniert mit den Konstellationspunkten der zweiten Signalkonstellation.

**5.** Verfahren gemäß Anspruch 1, wobei Anwenden der Phasendrehungsinformation ferner umfasst:
Empfangen eines von:
Leistungsniveauinformation von jedem des ersten Signals und des zweiten Signals,
Modulations- und Kodierungsschema, MCS, von jedem des ersten Signals und des zweiten Signals und
ein Flag, das anzeigt, dass die Phasendrehungen des ersten Signals und des zweiten Signals gerade angewendet werden.

**6.** Verfahren zum Übertragen von Daten durch eine Basisstation (1200), die gemäß einem Non-Orthogonal Multiple Access, NOMA, Schema arbeitet, wobei das Verfahren umfasst:

   Bestimmen einer Phasendrehungsinformation basierend auf einem Leistungsverhältnis zwischen einem ersten Signal und einem zweiten Signal, wobei die Drehungsinformation einen ersten Phasenwinkel einer ersten Signalkonstellation des ersten Signals und einen zweiten Phasenwinkel einer zweiten Signalkonstellation des zweiten Signals umfasst;
   Übertragen der Phasendrehungsinformation an eine erste UE und eine zweite UE (S1101);
   Empfangen, von der ersten UE und der zweiten UE, innerhalb einer selben physikalischen Ressource, eines kombinierten Signals umfassend ein erstes Signal und ein zweites Signal, die aufeinander überlagert sind (S1102);
   Dekodieren, von dem kombinierten Signal, das erste Signal (S1103); und
   Dekodieren, von dem kombinierten Signal, das zweite Signal auf Basis der Phasendrehungsinformation (S1104),
   wobei das erste Signal und das zweite Signal für unterschiedliche Anwendungen derselben UE sind.

**7.** Verfahren gemäß Anspruch 6,
wobei Bestimmen der Phasendrehungsinformation auf Basis des Leistungsverhältnisses zwischen dem ersten Signal und dem zweiten Signal ferner umfasst:
Bestimmen der Phasendrehungsinformation auf Basis des Leistungsverhältnisses aus einer Nachschlagetabelle, die in der Basisstation gespeichert ist.

**8.** Verfahren gemäß Anspruch 7,
wobei jeder Eintrag der Nachschlagetabelle enthält ein unterschiedliches Leistungsverhältnis und den ersten Phasenwinkel des ersten Signals und den zweiten Phasenwinkel des zweiten Signals entsprechend dem unterschiedlichen Leistungsverhältnis.

**9.** Verfahren gemäß Anspruch 8,
wobei der jeder Eintrag der Nachschlagetabelle vorbestimmt wurde auf Basis einer zufällig ausgewählten Phase in einem Phasenvektor, durch Maximieren eines minimalen Abstands zwischen Konstellationspunkten der zweiten Signalkonstellation, oder durch Maximieren von Information, kombiniert mit den Konstellationspunkten der zweiten Signalkonstellation.

**10.** Verfahren gemäß Anspruch 6, wobei Übertragen einer Phasendrehungsinformation ferner umfasst:
Übertragen eines von

Leistungsniveauinformation des ersten und des zweiten Signals,
Modulations- und Kodierungsschema, MCS, von jedem des ersten Signals und des zweiten Signals und
ein Flag, das anzeigt, dass Phasendrehungen des ersten Signals und des zweiten Signals gerade angewendet werden.

**11.** UE (1000), die gemäß einem Non-Orthogonal Multiple Access, NOMA, Schema arbeitet, und die UE umfasst:

einen Hardware-Transceiver (1002); und
einen Hardware-Prozessor (1001), der elektrisch mit dem Hardware-Transceiver (1002) verbunden ist und konfiguriert ist wenigstens zu:

empfangen, von einer Basisstation, innerhalb einer selben physikalischen Ressource durch den Hardware-Transceiver (1002), ein kombiniertes Signal umfassend ein erstes Signal und ein zweites Signal, die aufeinander überlagert sind; wobei der der Hardware-Prozessor (1001) ferner konfiguriert ist zu:
anwenden einer Phasendrehungsinformation für das erste Signal und das zweite Signal, durch Bestimmen eines Leistungsverhältnis zwischen dem ersten Signal und dem zweiten Signal und Bestimmen der Phasendrehungsinformation auf Basis des Leistungsverhältnisses;
entfernen, von dem kombinierten Signal, das zweite Signal auf Basis der Phasendrehungsinformation; und
dekodieren, von dem kombinierten Signal, das erste Signal,
wobei das erste Signal und das zweite Signal für unterschiedliche Anwendungen derselben UE sind,
wobei die Phasendrehungsinformation einen ersten Phasenwinkel einer ersten Signalkonstellation des ersten Signals und einen zweiten Phasenwinkel einer zweiten Signalkonstellation des zweiten Signals umfasst.

## Revendications

**1.** Procédé de réception de données par un équipement d’utilisateur, UE, (1000) qui fonctionne selon un schéma d’accès multiples non orthogonaux, NOMA, le procédé comprenant :

la réception, en provenance d’une station de base, à l’intérieur d’une même ressource physique, d’un signal combiné comprenant un premier signal et un deuxième signal qui sont superposés l’un sur l’autre (S901) ;
le procédé comprenant en outre :

l’application d’informations de rotation de phase pour le premier signal et le deuxième signal (S902) par la détermination d’un rapport de puissance entre le premier signal et le deuxième signal et la détermination des informations de rotation de phase sur la base du rapport de puissance ;
la suppression, à partir du signal combiné, du deuxième signal sur la base des informations de rotation de phase (S903) ; et
le décodage du premier signal à partir du signal combiné (S904),
dans lequel le premier signal et le deuxième signal sont destinés à des applications différentes du même UE,
dans lequel les informations de rotation de phase comprennent un premier angle de phase d’une première constellation de signal du premier signal et un deuxième angle de phase d'une deuxième constellation de signal du deuxième signal.

**2.** Procédé selon la revendication 1, dans lequel l'application des informations de rotation de phase sur la base du rapport de puissance comprend :
la détermination des informations de rotation de phase sur la base du rapport de puissance à partir d'une table de consultation qui est mémorisée dans l'UE.

**3.** Procédé selon la revendication 2, dans lequel chaque entrée de la table de consultation contient un rapport de puissance différent, le premier angle de phase du premier signal et le deuxième angle de phase du deuxième signal correspondant au rapport de puissance différent.

**4.** Procédé selon la revendication 3, dans lequel chaque entrée de la table de consultation a été prédéterminée sur la base d'une phase sélectionnée aléatoirement dans un vecteur de phase, par la maximisation d'une distance minimale entre des points de constellation de la deuxième constellation de signal, ou par la maximisation d'informations combinées aux points de constellation de la deuxième constellation de signal.

**5.** Procédé selon la revendication 1, dans lequel l'application des informations de rotation de phase comprend en outre : la réception de l'un de ce qui suit :

des informations de niveau de puissance de chacun du premier signal et du deuxième signal,
un schéma de modulation et de codage, MCS, de chacun du premier signal et du deuxième signal, et
un drapeau indiquant que des rotations de phase du premier signal et du deuxième signal sont actuellement appliquées.

**6.** Procédé de transmission de données par une station de base (1200) qui fonctionne selon un schéma d'accès multiples non orthogonaux, NOMA, le procédé comprenant :

la détermination d'informations de rotation de phase sur la base d'un rapport de puissance entre un premier signal et un deuxième signal, dans lequel les informations de rotation de phase comprennent un premier angle de phase d'une première constellation de signal du premier signal et un deuxième angle de phase d'une deuxième constellation de signal du deuxième signal ;
la transmission des informations de rotation de phase (S1101) à destination d'un premier UE et d'un deuxième UE ;
la réception, en provenance du premier UE et du deuxième UE, à l'intérieur d'une même ressource physique, d'un signal combiné comprenant un premier signal et un deuxième signal qui sont superposés l'un sur l'autre (S1102) ;
le décodage, à partir du signal combiné, du premier signal (S1103) ; et
le décodage, à partir du signal combiné, du deuxième signal sur la base des informations de rotation de phase (S1104),
dans lequel le premier signal et le deuxième signal sont destinés à des applications différentes du même UE.

**7.** Procédé selon la revendication 6, dans lequel la détermination des informations de rotation de phase sur la base du rapport de puissance entre le premier signal et le deuxième signal comprend en outre :
la détermination des informations de rotation de phase sur la base du rapport de puissance à partir d'une table de consultation qui est mémorisée dans la station de base.

**8.** Procédé selon la revendication 7, dans lequel chaque entrée de la table de consultation contient un rapport de puissance différent, le premier angle de phase du premier signal et le deuxième angle de phase du deuxième signal correspondant au rapport de puissance différent.

**9.** Procédé selon la revendication 8, dans lequel chaque entrée de la table de consultation a été prédéterminée sur la base d'une phase sélectionnée aléatoirement dans un vecteur de phase, par la maximisation d'une distance minimale entre des points de constellation de la deuxième constellation de signal, ou par la maximisation d'informations combinées aux points de constellation de la deuxième constellation de signal.

**10.** Procédé selon la revendication 6, dans lequel la transmission des informations de rotation de phase comprend en outre :

la transmission de l'un de ce qui suit

des informations de niveau de puissance de chacun du premier signal et du deuxième signal,
un schéma de modulation et de codage, MCS, de chacun du premier signal et du deuxième signal, et
un drapeau indiquant que des rotations de phase du premier signal et du deuxième signal sont actuellement appliquées.

**11.** Equipement d'utilisateur, UE, (1000) fonctionnant selon un schéma d'accès multiples non orthogonaux, NOMA, l'UE comprenant :

un émetteur-récepteur matériel (1002) ; et
un processeur matériel (1001) connecté électriquement à l'émetteur-récepteur matériel (1002) et configuré au moins pour :
la réception, en provenance d'une station de base, à l'intérieur d'une même ressource physique par l'intermédiaire de l'émetteur-récepteur matériel (1002), d'un signal combiné comprenant un premier signal et un deuxième signal qui sont superposés l'un sur l'autre ;
le processeur matériel (1001) étant en outre configuré pour :

l'application d'informations de rotation de phase pour le premier signal et le deuxième signal par la détermination d'un rapport de puissance entre le premier signal et le deuxième signal et la détermination des informations de rotation de phase sur la base du rapport de puissance ;
la suppression, à partir du signal combiné, du deuxième signal sur la base des informations de rotation de phase ; et
le décodage du premier signal à partir du signal combiné,

dans lequel le premier signal et le deuxième signal sont destinés à des applications différentes du même UE, dans lequel les informations de rotation de phase comprennent un premier angle de phase d'une première constellation de signal du premier signal et un deuxième angle de phase d'une deuxième constellation de signal du deuxième signal.

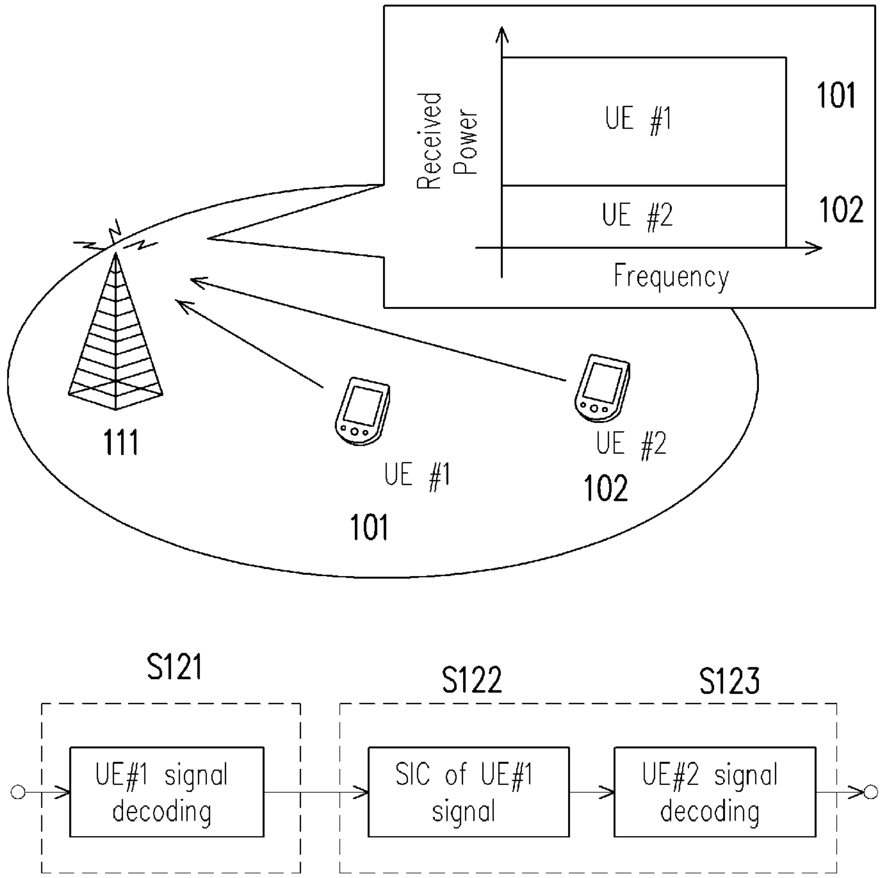
Received Power
Frequency
UE #1
UE #2
101
102
111
UE #1
101
UE #2
102
S121
S122
S123
UE#1 signal decoding
SIC of UE#1 signal
UE#2 signal decoding

FIG. 1

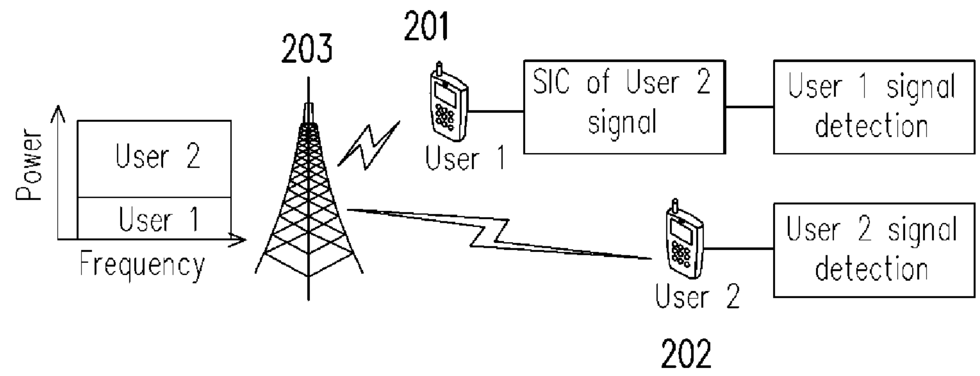
201
203
Power
Frequency
User 2
User 1
SIC of User 2 signal
User 1 signal detection
User 1
User 2 signal detection
User 2
202

FIG. 2

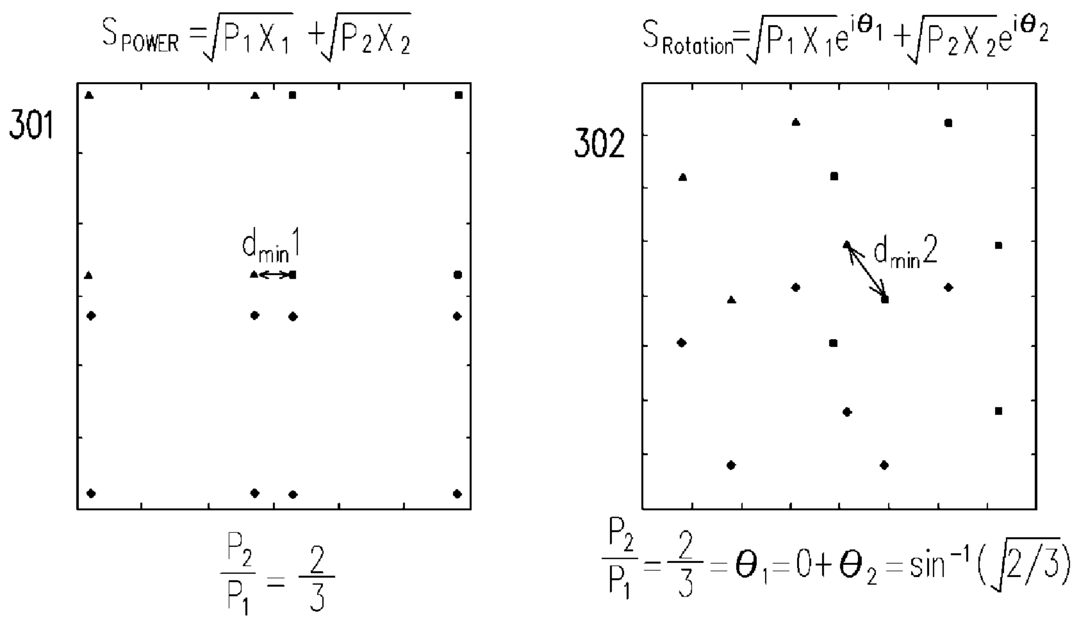
$S_{POWER} = \sqrt{P_1 X_1} + \sqrt{P_2 X_2}$
301
$d_{min}1$
$\frac{P_2}{P_1} = \frac{2}{3}$
$S_{Rotation} = \sqrt{P_1 X_1} e^{i\theta_1} + \sqrt{P_2 X_2} e^{i\theta_2}$
302
$d_{min}2$
$\frac{P_2}{P_1} = \frac{2}{3} = \theta_1 = 0 + \theta_2 = \sin^{-1}(\sqrt{2/3})$

FIG. 3

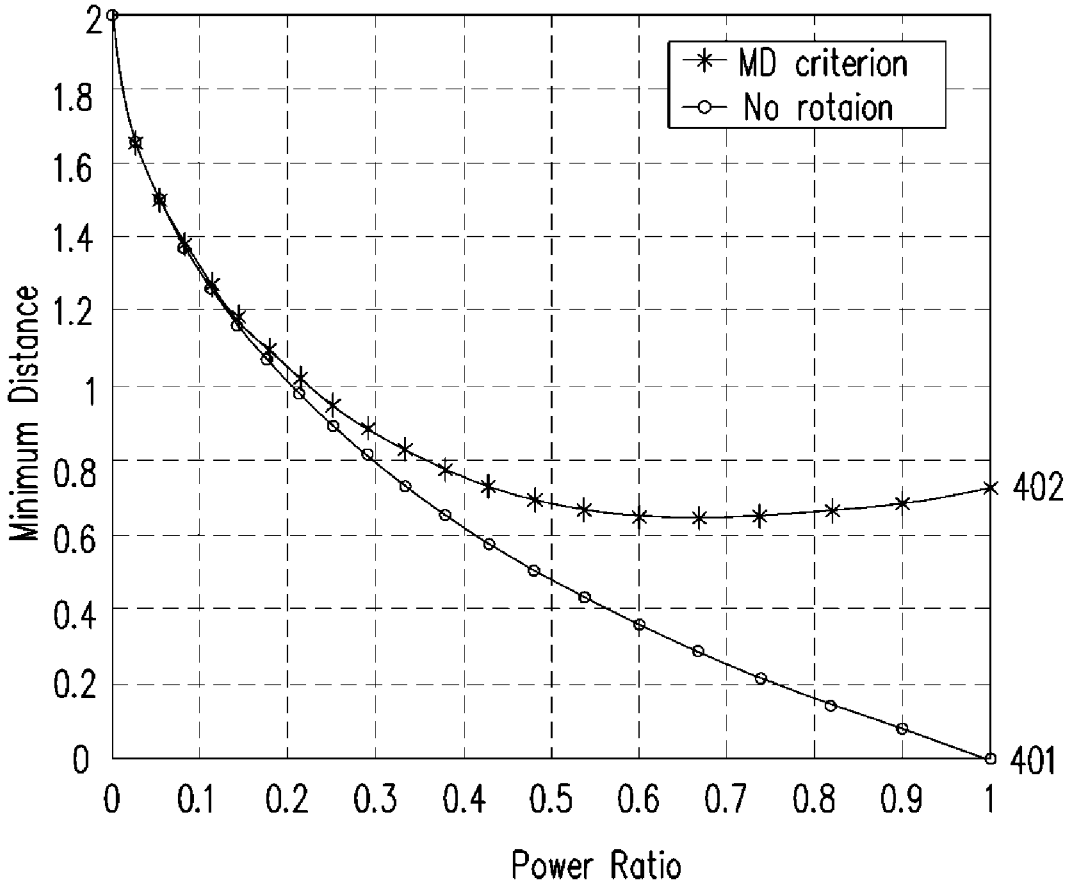
MD criterion
No rotaion
Minimum Distance
Power Ratio
2
1.8
1.6
1.4
1.2
1
0.8
0.6
0.4
0.2
0
0.1
0.2
0.3
0.4
0.5
0.6
0.7
0.8
0.9
1
402
401

FIG. 4

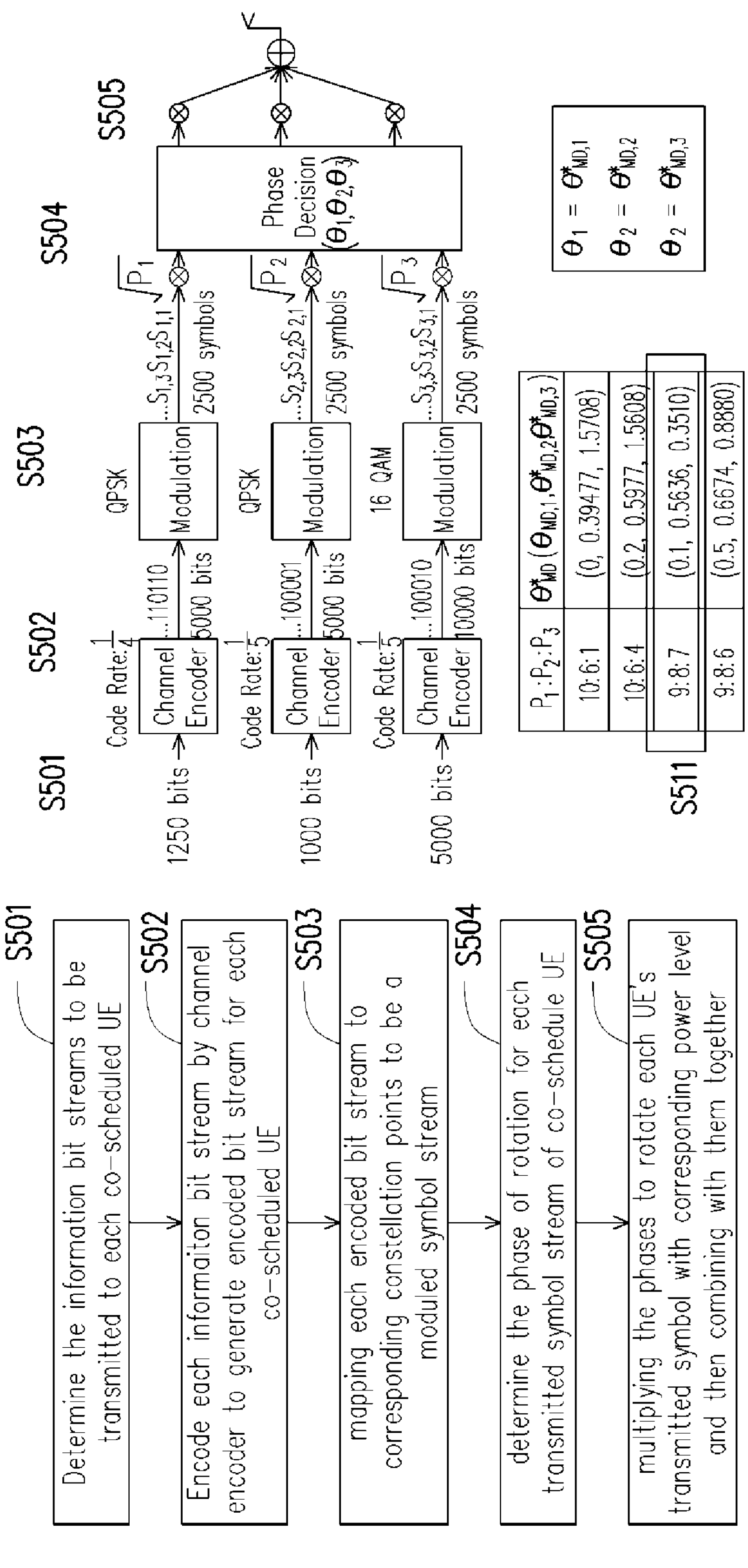
S501
Determine the information bit streams to be transmitted to each co-scheduled UE
S502
Encode each informaiton bit stream by channel encoder to generate encoded bit stream for each co-scheduled UE
S503
mapping each encoded bit stream to corresponding constellation points to be a moduled symbol stream
S504
determine the phase of rotation for each transmitted symbol stream of co-schedule UE
S505
multiplying the phases to rotate each UE's transmitted symbol with corresponding power level and then combining with them together
S501
S502
S503
S504
S505
1250 bits
Code Rate: 1/4
Channel Encoder
...110110
5000 bits
QPSK
Modulation
...S1,3S1,2S1,1
2500 symbols
√P1
1000 bits
Code Rate: 1/5
Channel Encoder
...100001
5000 bits
QPSK
Modulation
...S2,3S2,2S2,1
2500 symbols
√P2
5000 bits
Code Rate: 1/5
Channel Encoder
...100010
10000 bits
16 QAM
Modulation
...S3,3S3,2S3,1
2500 symbols
√P3
Phase Decision (θ1,θ2,θ3)
P1:P2:P3 | θ*MD (θMD,1,θ*MD,2,θ*MD,3)
10:6:1 | (0, 0.39477, 1.5708)
10:6:4 | (0.2, 0.5977, 1.5608)
9:8:7 | (0.1, 0.5636, 0.3510)
9:8:6 | (0.5, 0.6674, 0.8880)
S511
θ1 = θ*MD,1
θ2 = θ*MD,2
θ2 = θ*MD,3

FIG. 5

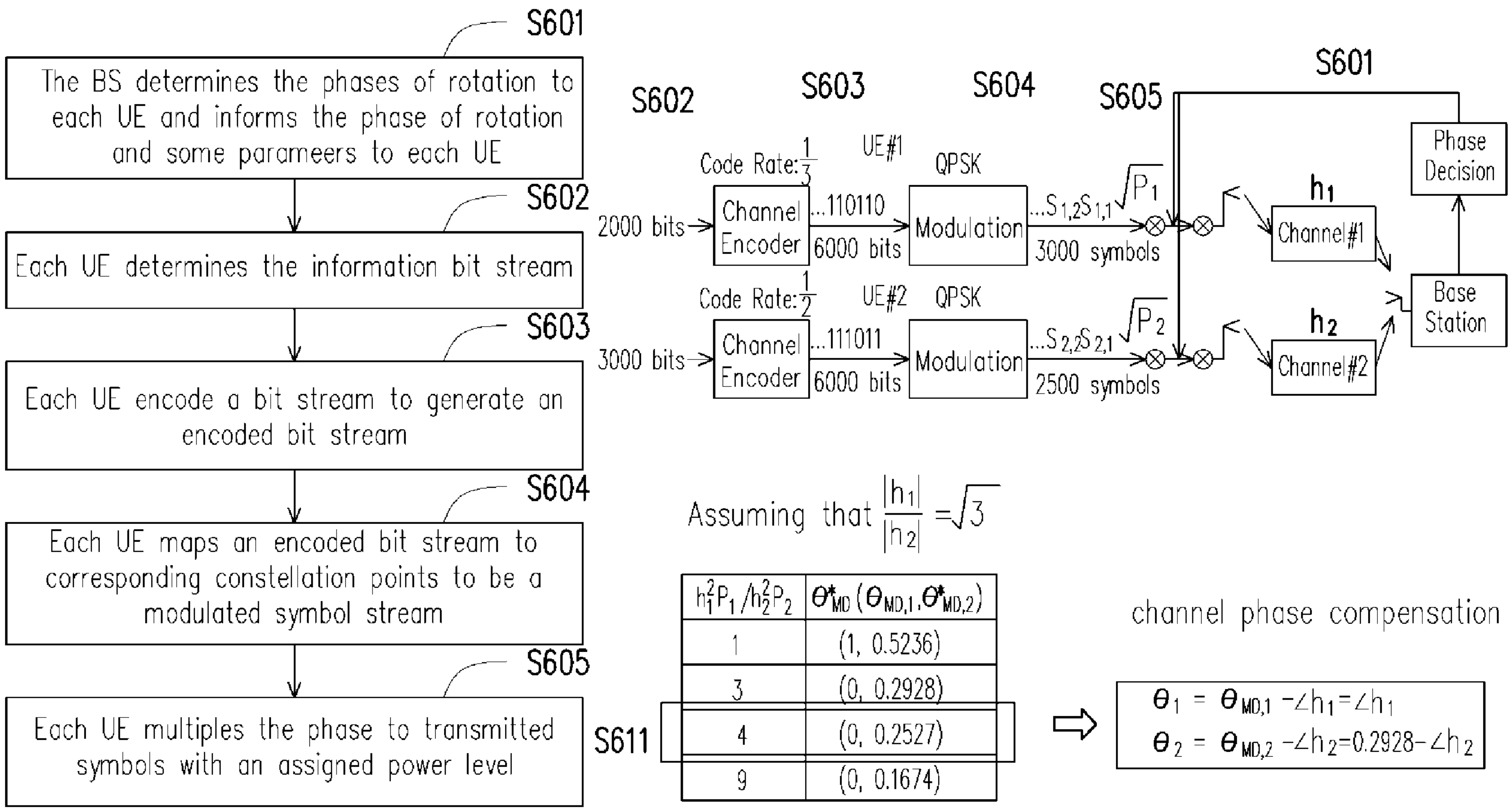
S601
The BS determines the phases of rotation to each UE and informs the phase of rotation and some parameers to each UE
S602
Each UE determines the information bit stream
S603
Each UE encode a bit stream to generate an encoded bit stream
S604
Each UE maps an encoded bit stream to corresponding constellation points to be a modulated symbol stream
S605
Each UE multiples the phase to transmitted symbols with an assigned power level
S602
S603
S604
S605
S601
2000 bits
Code Rate: 1/3
Channel Encoder
...110110
6000 bits
UE#1
QPSK
Modulation
...S1,2S1,1
3000 symbols
√P1
3000 bits
Code Rate: 1/2
Channel Encoder
...111011
6000 bits
UE#2
QPSK
Modulation
...S2,2S2,1
2500 symbols
√P2
h1
Channel#1
h2
Channel#2
Phase Decision
Base Station
Assuming that |h1|/|h2| = √3
h1²P1/h2²P2 | θ*MD (θMD,1, θ*MD,2)
1 | (1, 0.5236)
3 | (0, 0.2928)
4 | (0, 0.2527)
9 | (0, 0.1674)
S611
channel phase compensation
θ1 = θMD,1 −∠h1 = ∠h1
θ2 = θMD,2 −∠h2 = 0.2928 − ∠h2

FIG. 6

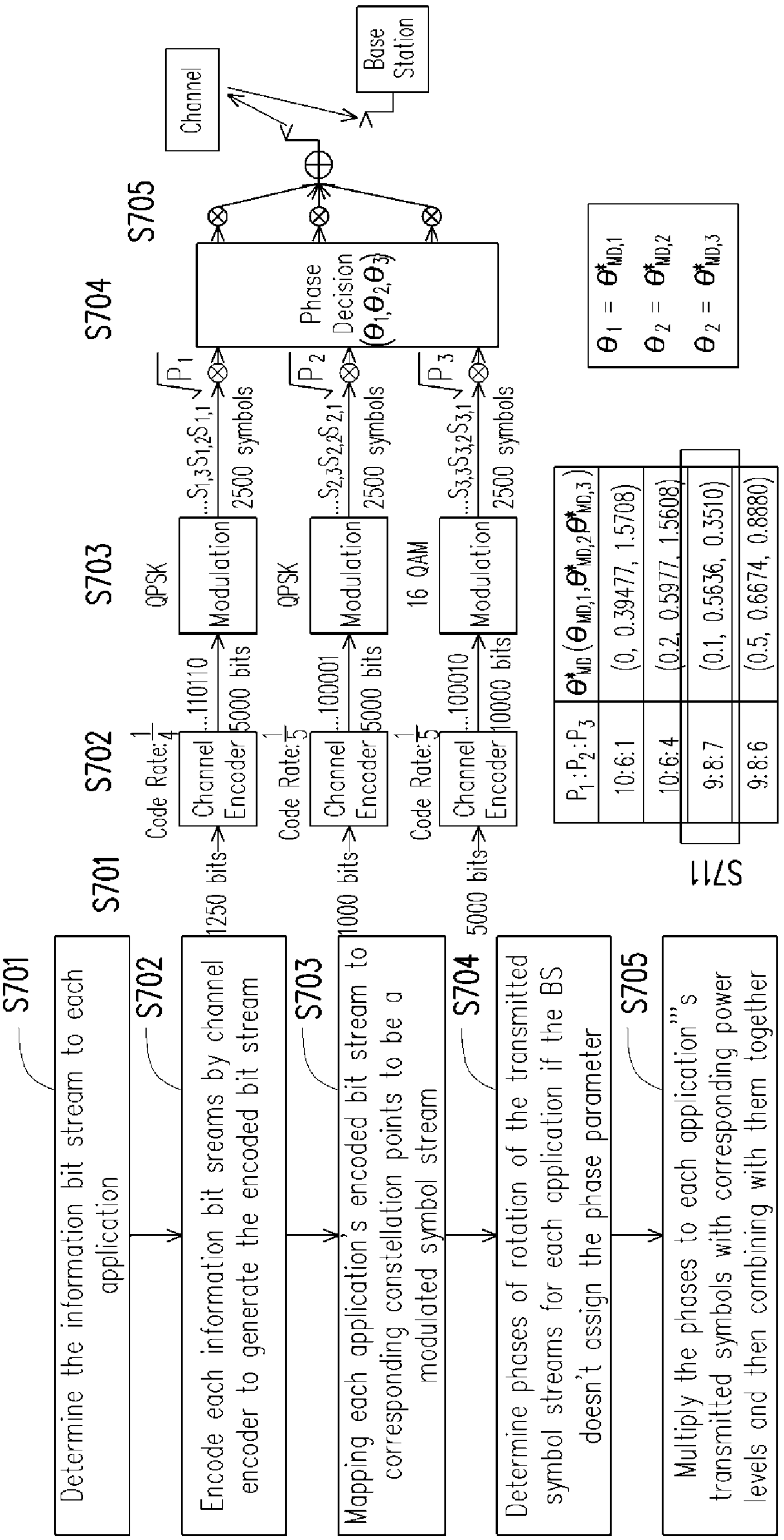
S701
Determine the information bit stream to each application
S702
Encode each information bit sreams by channel encoder to generate the encoded bit stream
S703
Mapping each application's encoded bit stream to corresponding constellation points to be a modulated symbol stream
S704
Determine phases of rotation of the transmitted symbol streams for each application if the BS doesn't assign the phase parameter
S705
Multiply the phases to each application"'s transmitted symbols with corresponding power levels and then combining with them together
S701
S702
S703
S704
S705
1250 bits
1000 bits
5000 bits
Code Rate: 1/4
Code Rate: 1/5
Code Rate: 1/5
Channel Encoder
Channel Encoder
Channel Encoder
...110110
...100001
...100010
5000 bits
5000 bits
10000 bits
QPSK
QPSK
16 QAM
Modulation
Modulation
Modulation
...S1,3S1,2S1,1
...S2,3S2,2S2,1
...S3,3S3,2S3,1
2500 symbols
2500 symbols
2500 symbols
√P1
√P2
√P3
Phase Decision (θ1,θ2,θ3)
Channel
Base Station
P1:P2:P3
θ*MD (θMD,1,θ*MD,2,θ*MD,3)
10:6:1
(0, 0.39477, 1.5708)
10:6:4
(0.2, 0.5977, 1.5608)
9:8:7
(0.1, 0.5636, 0.3510)
9:8:6
(0.5, 0.6674, 0.8880)
S711
θ1 = θ*MD,1
θ2 = θ*MD,2
θ2 = θ*MD,3

FIG. 7

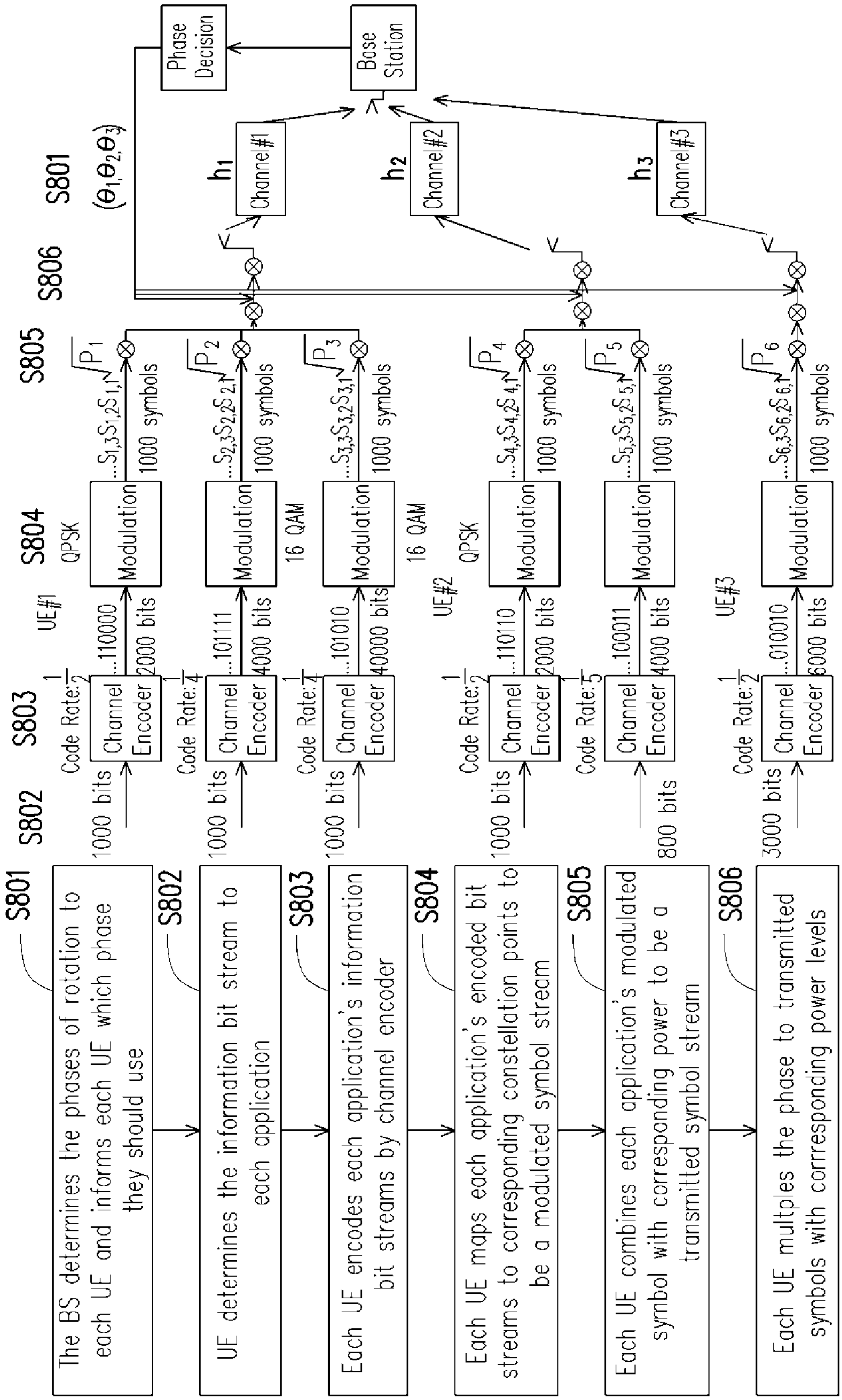

S801
The BS determines the phases of rotation to each UE and informs each UE which phase they should use
S802
UE determines the information bit stream to each application
S803
Each UE encodes each application's information bit streams by channel encoder
S804
Each UE maps each application's encoded bit streams to corresponding constellation points to be a modulated symbol stream
S805
Each UE combines each application's modulated symbol with corresponding power to be a transmitted symbol stream
S806
Each UE multples the phase to transmitted symbols with corresponding power levels
S802
S803
S804
S805
S806
S801
UE#1
UE#2
UE#3
1000 bits
1000 bits
1000 bits
1000 bits
800 bits
3000 bits
Code Rate: 1/2
Code Rate: 1/4
Code Rate: 1/4
Code Rate: 1/2
Code Rate: 1/5
Code Rate: 1/2
Channel Encoder
...110000
2000 bits
...101111
4000 bits
...101010
40000 bits
...110110
2000 bits
...100011
4000 bits
...010010
6000 bits
QPSK
16 QAM
16 QAM
QPSK
Modulation
...S1,3S1,2S1,1
...S2,3S2,2S2,1
...S3,3S3,2S3,1
...S4,3S4,2S4,1
...S5,3S5,2S5,1
...S6,3S6,2S6,1
1000 symbols
√P1
√P2
√P3
√P4
√P5
√P6
(θ1,θ2,θ3)
h1
h2
h3
Channel#1
Channel#2
Channel#3
Base Station
Phase Decision


FIG. 8

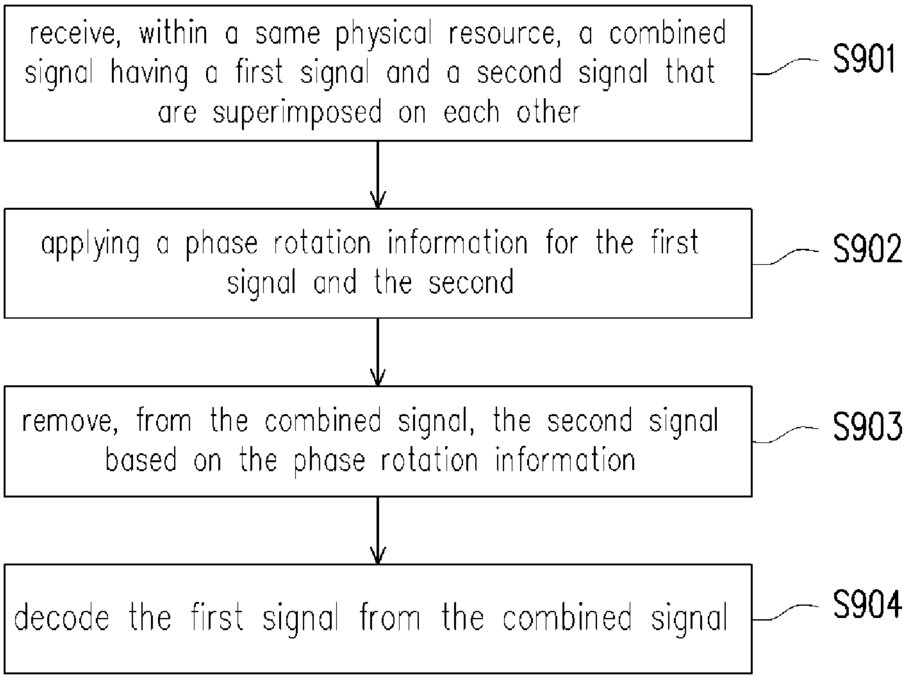
receive, within a same physical resource, a combined signal having a first signal and a second signal that are superimposed on each other
S901
applying a phase rotation information for the first signal and the second
S902
remove, from the combined signal, the second signal based on the phase rotation information
S903
decode the first signal from the combined signal
S904

FIG. 9

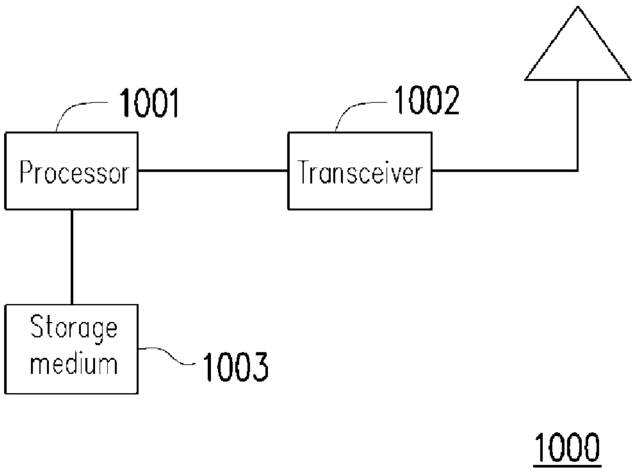
1001
Processor
1002
Transceiver
Storage medium
1003
1000

FIG. 10

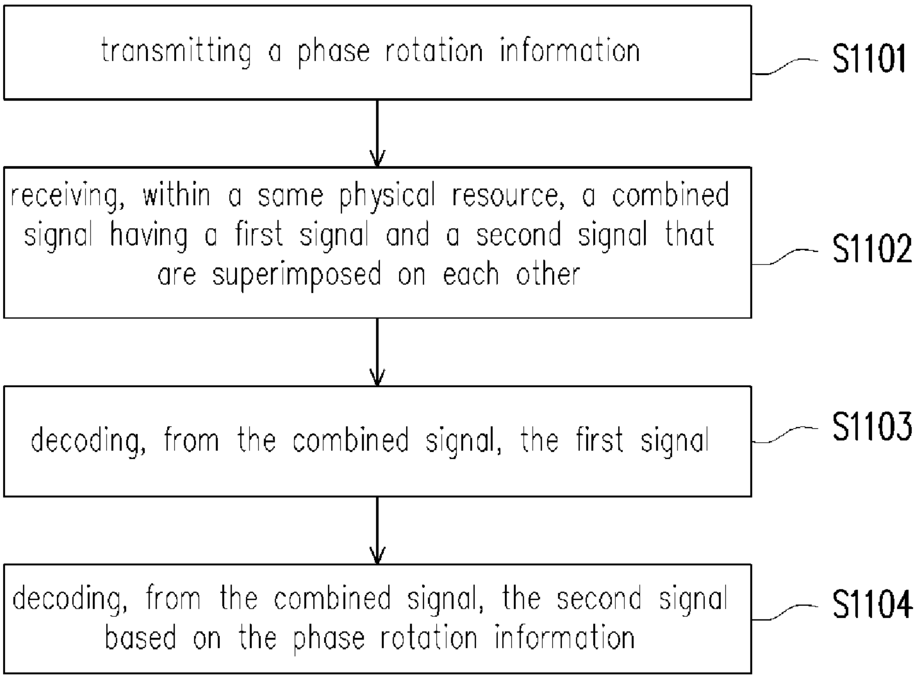
transmitting a phase rotation information
S1101
receiving, within a same physical resource, a combined signal having a first signal and a second signal that are superimposed on each other
S1102
decoding, from the combined signal, the first signal
S1103
decoding, from the combined signal, the second signal based on the phase rotation information
S1104

FIG. 11

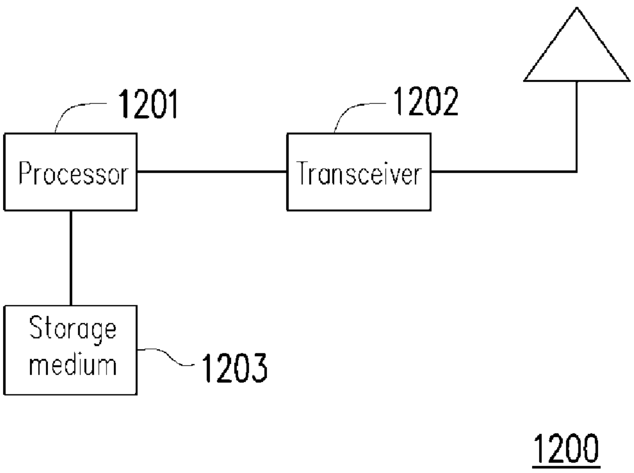
1201
Processor
1202
Transceiver
Storage medium
1203
1200

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016158537 A1